# EUROPÄISCHE PATENTANMELDUNG

(11) **EP 0 806 613 A2**
(43) Veröffentlichungstag der Anmeldung: **12.11.1997**
(21) Anmeldenummer: 97107151.9
(22) Anmeldetag: 30.04.1997
(51) Int. Cl.: F24D 3/14

(54) **Kunstoffplatte für Fussbodenheizungen**

(30) Priorität: 07.05.1996 DE 29608258 U
(71) Anmelder: DiTom Kunststoffentwicklungs- und Vertriebsgesellschaft mbH, 98529 Suhl (DE)
(72) Erfinder: Heuser, Thomas, 59320 Ennigerloh-Enniger (DE)
(74) Vertreter: Patentanwälte Meinke, Dabringhaus und Partner

(57) **Zusammenfassung**

Bei einer Kunststoffplatte für Fußbodenheizungen mit eingeprägten Kanälen zur klemmenden Aufnahme der Fußbodenheizungsrohre soll insbesondere der Legekomfort erhöht werden, wobei die Qualität der Kunststoffußbodenheizungsplatten nicht eingeschränkt sein soll.

Dies wird dadurch erreicht, daß die in der Verlegelage nach oben weisende Fläche der Kunststoffplatte (1) mit einer Mehrzahl von fliesenartig nebeneinander angeordneten Aluminium-Folienplatten (3) versehen ist, die der Oberflächenkontur der Kunststoffplatte (1) einschließlich der Rohrkanäle (2) angepaßt sind.

## Beschreibung

Die Erfindung richtet sich auf eine Kunststoffplatte für Fußbodenheizungen mit eingeprägten Kanälen zur klemmenden Aufnahme der Fußbodenheizungsrohre.

Kunststoffplatten für Fußbodenheizungen sind in unterschiedlichen Gestaltungen bekannt. Dabei sind insbesondere auch Platten aus Kunststoff, z.B. Polystyrol, bekannt, die auf ihrer Oberfläche nach außen weisende Klemmnocken aufweisen, zwischen die die Fußbodenheizungsrohre klemmbar sind. Es sind auch Platten bekannt, die in der Oberfläche mit einer reflektierenden Folie, z.B. einer Aluminium-Folie, versehen sind, die in der Regel dort aufkaschiert ist. In vielen Fällen müssen insbesondere in den Randbereichen der Räume, in denen die Fußbodenheizungen verlegt werden, die Kunststoffplatten beschnitten werden, um die gesamte Fußbodenfläche überdecken zu können, was insbesondere dann zeitraubend ist, wenn, wie dies häufig gewünscht wird, die reflektierenden Folien vergleichsweise stark ausgeführt sind.

Zum einschlägigen Stand der Technik sei auf die DE-29 32 551-A1, DE-30 32 163-A1, DE-34 01 868-A1 und DE-81 07 402-U1 verwiesen.

Insbesondere den Legekomfort zu erhöhen ist daher das Ziel der vorliegenden Erfindung, wobei die Qualität der Kunststoffußbodenheizungsplatten nicht eingeschränkt sein soll.

Mit einer Kunststoffplatte der eingangs bezeichneten Art wird diese Aufgabe gemäß der Erfindung dadurch gelöst, daß die in der Verlegelage nach oben weisende Fläche der Kunststoffplatte mit einer Mehrzahl von fliesenartig nebeneinander angeordneten Aluminium-Folienplatten versehen ist, die der Oberflächenkontur der Kunststoffplatte einschließlich der Rohrkanäle angepaßt sind.

Dadurch, daß die Oberfläche nicht mehr geschlossen mit einer Aluminium-Folie kaschiert ist, sondern diese Reflektionsfolie aus einzelnen, fliesenartig nebeneinander liegenden Elementen besteht, ist es mit einfachen Mitteln möglich, derartige Kunststoffplatten auf die gewünschten Größen zurechtzuschneiden, da etwa ein Trennmesser im Regelfalle nicht mehr die Aluminium-Folie selbst durchtrennen muß.

In Ausgestaltung ist vorgesehen, daß zwischen den Aluminium-Folienplatten Fugen vorgesehen sind, wobei sich dabei insbesondere anbietet, daß die Fugen mit einer Perforierung od. dgl. zur Bildung von Sollbruchstellen der Kunststoffplatten versehen sind, wie dies die Erfindung ebenfalls in Ausgestaltung vorsieht.

Durch die werkseitig eingebrachte Perforierung, hier können auch materialverdünnte Bereiche bzw. Materialbrücken in der Schaumkunststoffplatte vorgesehen sein, ist es möglich, in einer Art Schokoladentafel einzelne Stücke aus der Kunststoffplatte auszubrechen, ohne daß es dazu besonderer Werkzeuge bedarf, so daß die Kunststoffplatten einfach und schnell verlegt werden können.

Werden vergleichsweise materialstarke Aluminium-Folien benutzt, kann es zu Graten, insbesondere im Ein- und Auslaufbereich der Rohrkanäle kommen, die später in die Heizungsrohre eingedrückt werden, die häufig bzw. in der Regel selbst als Kunststoffrohre gefertigt sind. Da die Heizungsrohre bei Temperaturschwankungen Längsdehnungen unterworfen sind, kann es hier zu Scheuerstellen kommen, die die Heizungsrohre gefährden.

Um derartige Scheuerstellen mit Sicherheit zu vermeiden, sieht die Erfindung in weiterer Ausgestaltung vor, daß die Ein- und Auslaufbereiche der Rohrkanäle an den Aluminium-Folienplatten mit einer in Richtung auf die Kunststoffplatte weisenden Ein- bzw. Auslaufrundungen versehen sind. Damit werden Grate an den Kanten der Aluminium-Folienplatten mit Sicherheit verhindert.

Die Erfindung sieht auch vor, daß die Aluminium-Folienplatten auf Kunststoffplatten in unterschiedlichen Rastermaßen angeordnet sind. Ohne daß die Erfindung hierauf beschränkt wäre, können beispielsweise auf einer 100 X 500 mm Platte acht Aluminium-Folienplatten bzw. sechzehn Aluminium-Folienplatten angeordnet werden, die beispielsweise im ersten Falle ein Maß von 240 : 240 mm aufweisen können, im zweiten Falle ein Maß von 240 : 115 mm, so daß sich Fugenbreiten von 10 mm und Randabstände von 5 mm ergeben.

Um eine Befestigungsmöglichkeit der Aluminiumplatten auf der Kunststoffplatte mit einfachen Mitteln zu ermöglichen, sieht die Erfindung auch vor, daß die Aluminium-Folienplatten auf ihrer der Kunststoffplatte zugewandten Seite mit einer PE-lackierten Schicht ausgerüstet sind, wobei darüber hinaus auch vorgesehen sein kann, daß die PE-beschichteten Alumiunium-Folienplatten durch kurzzeitige Wärmeaufbringung mit der darunter liegenden Kunststoffplatte, insbesondere aus Polystyrol, fest verbunden sind.

Die Erfindung ist nachstehend anhand der Zeichnung beispielsweise näher erläutert. Diese zeigt in
- Fig. 1: eine Aufsicht auf eine Kunststoffplatte nach der Erfindung,
- Fig. 2: einen Schnitt etwa nach Linie II-II in Fig. 1,
- Fig. 3: eine räumliche Darstellung einer zum Einsatz kommenden Aluminium-Folienplatte in vergrößerter Darstellung sowie in
- Fig. 4: in wiederum vergrößerter Darstellung den Ein- bzw. Auslaufbereich einer solchen Folienplatte für ein Heizungsrohr.

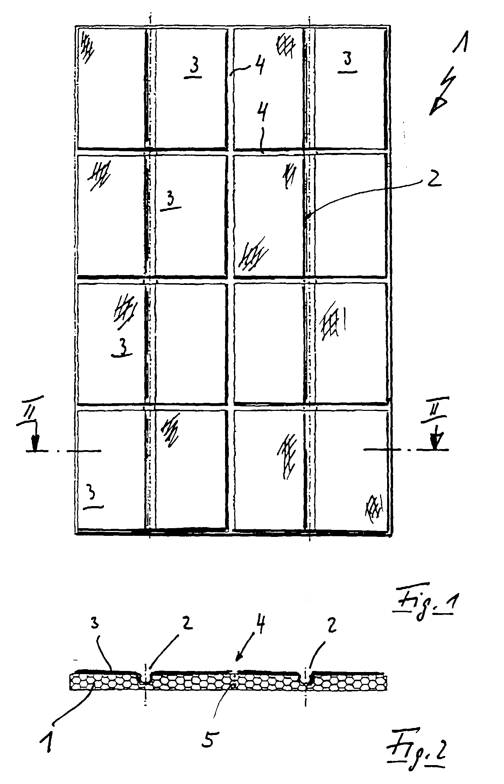

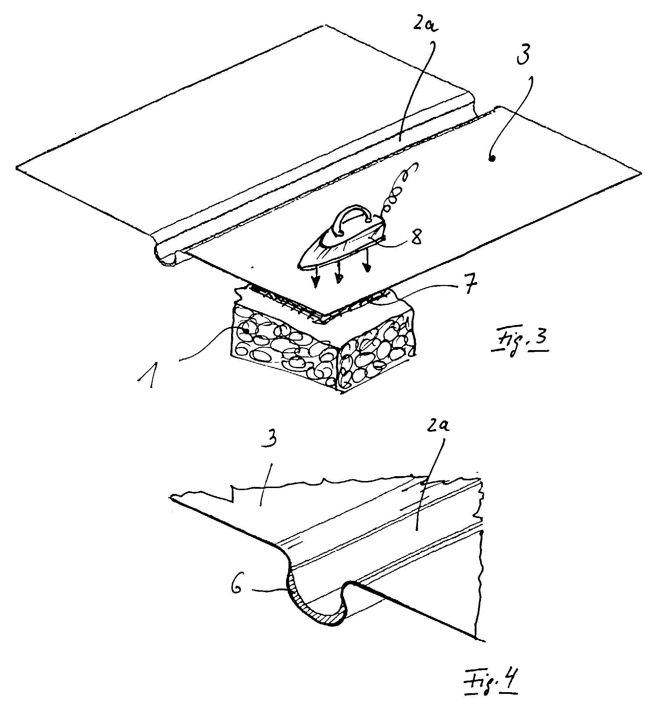

Die allgemein mit 1 bezeichnete Kunststoffplatte ist beispielsweise aus einem Schaumkunststoff, wie Polystyrol, hergestellt. Sie weist im dargestellten Beispiel zwei Längskanäle 2 auf und ist mit fliesenartig nebeneinandergeordneten Aluminium-Folienplatten 3 bestückt, im dargestellten Beispiel mit acht derartigen Platten. Die Platten 3 sind in Fig. 2 zur besseren Darstellung in ihrer Dicke übertrieben wiedergegeben. Eine derartige Platte ist auch in Fig. 3 vergrößert dargestellt.

Erkennbar sind zwischen den Platten Fugen 4 vorgesehen, die mit einer Perforation 5 versehen sein können, um hier ein leichtes Abbrechen von Einzelplatten 3 oder einem Verbund mehrerer Platten zu ermöglichen, etwa wie dies bei einer Schokoladentafel möglich ist.

Eine derartige Aluminiumplatte 3 ist ebenfalls mit einem mittigen Rohrkanal 2a ausgestattet, der sich in den entsprechenden Rohrkanal 2 der Kunststoffplatte 1 formschlüssig einlegt.

Um den in Fig. 4 näher dargestellten Einlaufbereich in diesem Kanal 2a gratfrei zu gestalten, ist die Randkante des Kanales, in Fig. 4 gestrichelt dargestellt und mit 6 bezeichnet, nach unten abgebogen, dieser Bereich drückt sich in die Schaumkunststoffplatte 1 beim Aufkaschieren ein. Damit ist gewährleistet, daß der Ein- und Auslaufbereich in die Aluminium-Platten 3 für die einzukommenden Heizungsrohre kein Schädigungspotential darstellt, scharfe Kanten treten hier nicht auf, so daß das eingelegte Rohr sich problemlos in Längsrichtung bei Temperaturschwankungen bewegen kann.

In Fig. 3 ist schließlich noch angedeutet, daß nach einer Variante der Erfindung die Aluminium-Folienplatten auf ihrer der Kunststoffplatte 1 zugewandten Seite mit einer Heißschmelzkleberbeschichtung, z.B. einer PE-Lackschicht 7, ausgerüstet sein können, die durch Wärmeeinwirkung, symbolisch angedeutet durch ein Bügeleisen 8, mit der Polystyrolplatte 1 verbunden werden können.

Natürlich ist das beschriebene Ausführungsbeispiel der Erfindung noch in vielfacher Hinsicht abzuändern, ohne den Grundgedanken zu verlassen. So ist die Erfindung insbesondere nicht auf die hier dargestellte Anzahl von Aluminium-Folienplatten pro Kunststoffplatteneinheit, wie oben schon erwähnt, beschränkt, auch nicht auf den hier dargestellten geraden Verlauf der Rohrkanäle 2 bzw. 2a. Hier können z.B. auch Krümmungen vorgesehen sein, auch können die Folienplatten für Noppen- oder Nockenplatten vorgesehen sein u. dgl. mehr.

## Patentansprüche

1. Kunststoffplatte für Fußbodenheizungen mit eingeprägten Kanälen zur klemmenden Aufnahme der Fußbodenheizungsrohre,
dadurch gekennzeichnet,
daß die in der Verlegelage nach oben weisende Fläche der Kunststoffplatte (1) mit einer Mehrzahl von fliesenartig nebeneinander angeordneten Aluminium-Folienplatten (3) versehen ist, die der Oberflächenkontur der Kunststoffplatte (1) einschließlich der Rohrkanäle (2) angepaßt sind.

2. Kunststoffplatte nach Anspruch 1,
dadurch gekennzeichnet,
daß zwischen den Aluminium-Folienplatten (1) Fugen (4) vorgesehen sind.

3. Kunststoffplatte nach Anspruch 1 oder 2,
dadurch gekennzeichnet,
daß die Fugen (4) mit einer Perforierung (5) od. dgl. zur Bildung von Sollbruchstellen der Kunststoffplatte (1) versehen sind.

4. Kunststoffplatte nach einem der vorangehenden Ansprüche,
dadurch gekennzeichnet,
daß die Ein- und Auslaufbereiche (Fig. 4) der Rohrkanäle (2a) an den Aluminium-Folienplatten (3) mit einer in Richtung auf die Kunststoffplatte weisenden Ein- bzw. Auslaufrundung (6) versehen sind.

5. Kunststoffplatte nach einem der vorangehenden Ansprüche,
dadurch gekennzeichnet,
daß die Aluminium-Folienplatten (3) auf Kunststoffplatten (1) in unterschiedlichen Rastermaßen angeordnet sind.

6. Kunststoffplatte nach einem der vorangehenden Ansprüche,
dadurch gekennzeichnet,
daß die Aluminium-Folienplatten (3) auf ihrer der Kunststoffplatte (1) zugewandten Seite mit einer PE-lackierten Schicht ausgerüstet sind.

7. Kunststoffplatte nach einem der vorangehenden Ansprüche,
dadurch gekennzeichnet,
daß die PE-beschichteten Alumiunium-Folienplatten durch kurzzeitige Wärmeaufbringung mit der darunter liegenden Kunststoffplatte (1), insbesondere aus Polystyrol, fest verbunden sind.
